# EUROPEAN PATENT APPLICATION

(11) **EP 1 441 497 A2**
(43) Date of publication of application: **28.07.2004**
(21) Application number: 04100126.4
(22) Date of filing: 16.01.2004
(51) Int. Cl.: H04N 1/00

(54) **Image pickup device, image pickup device program and image pick up method**

(30) Priority: 17.01.2003 JP 2003009285
(71) Applicant: Omron Corporation, Kyoto-shi, Kyoto 600-8530 (JP)
(72) Inventor: Lao, Shihong, 600-8530, Kyoto (JP); Kawade, Masato, 600-8530, Kyoto (JP)
(74) Representative: Weihs, Bruno

(57) **Abstract**

An image pickup device, an image pickup device program and an image pickup method are disclosed, in which an image is picked up by setting the image pickup conditions suitable for an object, and the face image thus picked up can be easily corrected in accordance with the characteristics and preferences of the object. Once a shutter button is pressed halfway and a line-of-sight sensor 14 confirms that the line of sight of a photographer is set, a CPU 5 generates a preview image, and upon detection of the face image, infers the race, age and sex of the object using the feature amount of the face image. Further, image pickup parameters suitable for the inference result and the measurement of a length measuring sensor 13 are set, and the main image pickup process is executed under the image pickup conditions corresponding to the parameters. Furthermore, the result of detection of the face image, the inference result and the information additionally input after image pickup operation are linked with the image acquired by the main image pickup process, and stored in a memory 6 or a memory card 16 or output externally through a USB interface 15.

## Description

### BACKGROUND OF THE INVENTION

### 1. Field of the Invention

The present invention relates to an image pickup device comprising an image pickup unit including a lens and an image sensor and a control unit for storing a processed image in an internal memory or a predetermined storage medium, or more in particular to a technique for the image pickup device to generate an image including the face of an object in accordance with the image pickup operation with a person as an object.

### 2. Description of the Background Art

In recent years, techniques have been disclosed for extracting an image area corresponding to the face of an object from an image picked up from a person constituting the object, and adjusting the image pickup conditions such as the exposure amount or correcting the image thus picked up, based on the feature amount within the particular area. Examples of these techniques are described in Japanese Unexamined Patent Publications No. 10-268447, No. 8-62741 and No. 11-146405.

Japanese Unexamined Patent Publication No. 10-268447 discloses a technique in which a photograph is printed using the image data retrieved from an image sensor in such a manner that the face area of a person is extracted from the image data, and based on the light measurement data within the particular area, the exposure amount is determined for correction and the image is adjusted in accordance with the features of the face image.

Japanese Unexamined Patent Publication No. 8-62741 discloses a technique in which an image picked up by a camera is printed out in such a manner that a skin color area corresponding to the face image is extracted from the image to be processed, and based on the brightness information of the same image, the intensity of back light is determined. According to the degree of human presence and the intensity of back light, the gradation is corrected differently.

Japanese Unexamined Patent Publication No. 11-146405 discloses a video signal processing device such as a color video camera, in which a skin color area is extracted in the process of retrieving the video signal, and upon extraction of the skin color area, the video signal is corrected in brightness and color. In this way, only the skin color area can be corrected.

In the conventional correction process described including the techniques contained in the patent publications described above, the correction parameters appear to be determined by comparing the feature amounts such as the brightness and color of the face image with a predetermined reference. This reference of correction, however, is determined in accordance with the skin color of a predetermined race, and therefore the correction process executed for other races as an object may develop an inconvenience. The conventional techniques described in the cited patent publications are invented by Japanese and the skin color is normally assumed to be yellow.

In the case where an image of a black person is picked up as an object with the reference of correction based on the race of yellow skin color, for example, the correction parameters for back light may be applicable. Since the face image of a black person and the face image in back light are actually considerably different from each other, however, the proper correction is difficult. In the case where a white person becomes an object, on the other hand, a correcting process, if executed, similar to that for a yellow person would lead to a yellowish skin color and is liable to form an apparently unnatural image.

A unified correction parameter may encounter a difficulty also in the case where the age or sex is different, like the race. The face image of a person in the twenties and the face image of a person in the forties, for example, are considered to have a considerable difference in the parts to be corrected and the reference. Also, a male object and a female object generally may have different face color references which are considered preferable.

Further, different persons have different preferences about the color and brightness of the face, and a preference may be varied according to the current fashion or from one season to another. The face images of individual objects having these various factors cannot be corrected with the unified reference as in the prior art.

### SUMMARY OF THE INVENTION

This invention has been developed in view of the problems described above, and an object thereof is to provide an image pickup device, an image pickup program and an image pickup method in which an image of an object is picked up by automatically setting the image pickup conditions in accordance with the attributes and the preferences of each object person.

Another object of the invention is to provide an image pickup device, an image pickup program and an image pickup method in which the information required for correcting the face image of each object is stored as linked to the image picked up, so that the face image picked up can be easily corrected in accordance with the characteristics or preferences of the object.

According to a first aspect of the invention, there is provided an image pickup device comprising an image pickup unit including a lens and an image sensor, and a control unit for processing the image picked up by the image pickup unit and storing the processed image in an internal memory or a predetermined storage medium, wherein the control unit includes a face image extraction part for extracting the face image contained in the image picked up by the image pickup unit, an inference part for executing the process of inferring the attributes or specifically at least the race, age and sex of an object person based on the feature amounts in an image area including the face image extracted, an image pickup conditions adjusting part for adjusting the image pickup conditions for the image pickup unit based on the result of inference in the inference part, and an information processing part for storing in the memory or the storage medium the image obtained under the image pickup conditions adjusted by the image pickup conditions adjusting part.

The image pickup unit, in addition to the lens and the image sensor such as CCD, may include a mechanism for adjusting the lens stop and the focal point, a mechanism for driving the image sensor, a strobe and a mechanism for adjusting the intensity of the strobe.

The control unit is preferably configured of a computer incorporating a program required for processing each of the part described above. The control unit, however, is not necessarily configured of a computer alone, and may include a dedicated circuit for executing a part of the processes.

The memory for storing the processed image is preferably a nonvolatile memory such as a hard disk or a flush memory. The storage medium is preferably a removable one such as a memory card, a Compact Flush (registered trade mark), a CD-R/RW, a DVD-R/RW or a digital video tape having a sufficient capacity to store a plurality of images.

Further, the image pickup device is required to be equipped with an A/D converter for converting an analog image signal generated by the image pickup unit into a digital image signal. Furthermore, the image pickup device may comprise an image processing circuit for compressing or otherwise converting the digital image into an image data in a predetermined file format.

The face image extraction part scans a search area of a predetermined size on the image input from the image pickup unit at a predetermined timing and searches for the features points indicating the features of the organs making up the face thereby to extract a face image. Nevertheless, the invention is not necessarily limited to this method, but a face image can alternatively be extracted by the conventional method of detecting a skin color area or the simple pattern matching process.

The inference part is used to determine the race, age and sex with high accuracy by the arithmetic operation using the feature points of the face organs. The race can be inferred using, for example, the technique described in the first reference cited below, or other methods of extracting the brightness distribution in the face image. The age and sex, on the other hand, can be estimated by the method described, for example, in the second reference cited below.

The first reference includes Gregory Shakhnarovich, Paul A. Viola, Baback Moghaddam; "A Unified Learning Framework for Real Time Face Detection and Classification"; Proceedings of the Fifth IEEE International Conference on Automatic Face and Gesture and Gesture Recognition, US. Institute of Electrical and Electronics Engineers (IEEE), May 2002.

For estimating the age and sex, on the other hand, the method disclosed in the second reference Kiyoshi Hosoi, Erina Takigawa and Masato Kawade; "Sex and Age Estimation System by Gabor Wavelet Transform and Support Vector Machine", Proceedings of Eighth Image Sensing Symposium, Image Sensing Technological Research Society, July 2002.

The feature amounts used for inference are acquired mainly from the extraction area of the face image. Nevertheless, the feature amounts of the whole or a part of the image and the area around the face image may also be included. The feature amounts thus extracted include the mean and variance of color and lightness of the face image, intensity distribution, the color difference or the lightness difference with the surrounding image. Also, by applying these feature amounts to a predetermined calculation formula, the secondary feature amounts required for inference can be determined.

Examples of the image pickup conditions adjusted according to this invention include the shutter speed and the stop for determining the exposure amount, the focal length and the presence or absence of the strobe and the intensity thereof. With the image pickup device described above, the image pickup conditions can be automatically adjusted based on the inference result after executing the face image extraction process and the inference process.

In executing the process for adjusting the image pickup conditions, a set table indicating the correspondence between an adjust value (hereinafter referred to as the "image pickup parameter") for determining each image pickup condition and each factor constituting the object of inference is prepared preferably beforehand, so that the result of the inference process is compared with the set table to acquire the image pickup parameter corresponding the inference result. In this set table, at least one of the race, age and sex is classified into a plurality of categories (for example, "white person", "yellow person" and "black person" for the race, and "teens", "twenties" and "thirties" for the age), and for each combination of these categories, the corresponding one of various image pickup parameters is determined.

With the image pickup device described above, the condition most suitable for the object are selectively set from a plurality of reference image pickup conditions for the race, age and sex, and the image pickup operation is performed under this condition. Specifically, an image can be picked up by adjusting the image pickup conditions automatically according to the race, age and sex of individual objects.

According to a second aspect of the invention, there is provided an image pickup device comprising an image pickup unit and a control unit similar to those of the image pickup device according to the first aspect of the invention. The control unit of the image pickup device to the second aspect of the invention includes
a registration part for holding the registration information on the correspondence between the feature amount of the face image of each of a predetermined number of objects and the information required for adjusting the optimum image pickup conditions on the one hand and the identification information unique to the object on the other hand,
a face image extraction part for extracting the face image contained in the image acquired by the image pickup unit,
an inference part for estimating the object by comparing the feature amount of the face image extracted by the face image extraction part with the information registered in the registration part,
an image pickup conditions adjusting part for adjusting the image pickup conditions for the image pickup unit using the registered information of the object estimated by the inference part, and
an information processing part for storing in the memory or the storage medium the image picked up under the image pickup conditions adjusted by the image pickup conditions adjusting part.

In this configuration, the registration part can be set in the memory of the computer making up the control unit. The "information required for adjusting the optimum image pickup conditions" is, for example, a parameter for specifying the color of the face image (gradation, lightness, etc. of R, G, B making up the face color), and preferably adjusted to the color liked by the object to be registered. The identification information unique to the object, on the other hand, preferably includes the name (which is not limited to the full name but may be a nick name) of an object by which the photographer or the object can be easily confirmed.

The extraction process of the face image by the face image extraction part can be executed in the same manner as in the image pickup device according to the first aspect of the invention. The inference part can estimate who an object is by the process of comparing the feature amount of the face image obtained by the extraction process with the feature amount of the face image of each object registered in the registration part.

In the image pickup conditions adjusting part, the image pickup conditions for the object recognized are adjusted based on the information required to adjust the optimum image pickup conditions. In the case where a parameter indicating an optimum skin color of an object is registered as the aforementioned information, for example, exposure is adjusted, for example, in such as a manner that the extracted face image is as similar as possible to the particular optimum skin color.

In the image pickup device according to this second aspect of the invention, the information required for adjusting the optimum image pickup conditions and the feature amounts of the face image of a particular person to be an object are registered beforehand in the registration part. Thus, an image is picked up by automatically adjusting the image pickup conditions to acquire a face image liked by the particular object.

The image pickup devices according to the first and second aspects of the invention described above can be configured as a camera for generating a digital still image (hereinafter simply referred to as the "digital camera"). In the device of this type, the image sensor is driven at the timing when the photographer is considered to have determined an image pickup area such as when the shutter button is pressed halfway or the line-of-sight sensor has detected that the line of sight of the photographer has been set in a predetermined direction, and after adjusting the image pickup conditions using the image thus obtained, the image sensor is desirably driven again. In this case, the image picked up under the adjusted image pickup conditions is stored in the memory or the storage medium.

As an alternative, a high-speed processing CPU is incorporated or a plurality of CPUs are mounted in the control unit to execute the process of extracting or inferring the face image in real time, and the image sensor is driven continuously. Then, the image pickup device is rendered to function as a camera device for generating a dynamic image (hereinafter referred to as the "digital video camera"). In this case, the images picked up under the adjusted image pickup conditions are desirably accumulated sequentially in the memory or the storage medium while continuously executing the face image extraction process, the inference process and the process of adjusting the image pickup conditions.

Next, various embodiments shared by the image pickup devices according to the first and second aspects of the invention are explained. First, according to one preferred embodiment, the information processing part includes part for generating link information containing the position of extracting the face image by the image extraction part and the inference information obtained by the inference processing of the inference part, and the link information is stored in the memory or the storage medium together with the image picked up by the image pickup unit.

According to this embodiment, the position of extracting the face image and the result of the inference process are stored as linked with the image, and therefore even after the image is picked up, the face image can be corrected in detail using the link information. The face image after being picked up is corrected desirably using an external device such as a personal computer. The image pickup device, therefore, preferably comprises an interface circuit or an output terminal corresponding to the external device so as to output the stored image and the link information to the external device. In the case where the removable storage medium described above is used, however, the correcting process can be executed by the external device without using the output function.

According to this embodiment, the picked-up image and the link information are retrieved into the external device for more detailed correction. The image thus processed is printed, displayed on the monitor or distributed through a communication line such as an internet.

In the image pickup device according to the second aspect of the invention, the link information can contain the object identification information. After executing the correcting operation suitable for the object in the external device, therefore, the specifics of the correction are registered in correspondence with each identification information.
Thus, the face image of the same object can be corrected later in the same manner as in the preceding correction using the registered information. Also, since the image is linked with the personal identification information, the picked-up images can be readily put in order or printed as photo copies.

Further, the link information can include the additional information such as the image pickup date and the image pickup conditions that have been set.

An image pickup device according to another embodiment comprises a distance recognition part for recognizing the distance to an object, wherein the face image extraction part includes part for specifying the size of the face image to be extracted, based on the result of recognition by the distance recognition part.

The distance recognition part can be a distance measuring sensor utilizing the reflected light. The face image extraction part, after estimating the size of the object face based on the distance recognized by the distance recognition part, sets a search area of a size corresponding to the size of the face estimated on the image to be processed, or adjusts the size of the provisionally-acquired image based on the estimation result without changing the size of the search area. In this way, only the face image corresponding to the estimated size can be searched for. In any way, the time required for the extraction process of the face image is shortened according to the size of the face image to be extracted, thereby realizing a high-speed processing corresponding to the image pickup operation.

In another method of shortening the time of extracting the face image, the direction of the line of sight of the photographer is specified by the line-of-sight sensor or the like and the search is made by limiting the face image detection range from the same direction. Also, in view of the fact that the image of the same person is picked up very often, an image containing the features similar to those of the face image obtained in the preceding extraction process can be searched for preferentially within a predetermined time elapsed from the preceding image pickup process.

As described above, by shortening the time required for face image extraction, the face image extraction process can be completed in a short time in accordance with the image pickup operation of the photographer.

In an image pickup device according to still another embodiment of the invention, the control unit includes a focal length adjusting part for adjusting the focal length of the lens of the image pickup unit in accordance with the extraction result of the face image extraction part.

A normal auto-focus image pickup device develops an inconvenience in which the face of the object becomes unclear, for example, as the result of an image being focused at the center of the image or before the object. With the image pickup device according to this embodiment, in contrast, the focal length is adjusted in such a manner as to focus the face of the object based on the result of face image extraction, and therefore the face image of the object can be clearly picked up. Especially in the case where images are picked up continuously or the image pickup device is configured as a video camera, the repetitive execution of the face extraction process and the focal length adjusting process described above makes adjustment possible whereby the face of the object is always focused.

Also, by executing the inference process for the face image thus focused, a more accurate inference result is obtained.

An image pickup device according to yet another embodiment of the invention comprises a first operating unit for designating the face image extraction range, wherein the face image extraction part includes a part for limiting the face image extraction area of the image picked up by the image pickup unit in accordance with the designating operation of the first operating unit.

The first operating unit may be arranged at an appropriate position on the body of the image pickup device. Preferably, however, the image pickup device comprises a display unit for displaying the image picked up by the image pickup unit and a user interface for designating the face image extraction range on the image displayed on the display unit. The first operating unit may be configured integrally with second and third operating units described later.

According to this embodiment, the face image extraction process is limited to the area designated by the photographer, and therefore the time required for the extraction process is shortened.

An image pickup device according to a further embodiment of the invention comprises a second operating unit for designating a predetermined one of the results of extraction of a predetermined face image, wherein the face image extraction part includes a part for updating the face image extraction result in accordance with the designating operation of the second operating unit.

The second operating unit preferably includes a display unit for displaying the face image extraction result and a user interface for receiving the designation of the deletion on the display screen of the display unit. Incidentally, the face image extraction result can be displayed by arranging the pointer at the face image extraction point on the provisionally-acquired image. More preferably, a marking is displayed to clarify the position and size of the face image (for example, by setting a frame image including the face image).

According to this embodiment, in the case where a face image of other than the person constituting an object is included, the extraction result of the face image of the particular person other than the object is deleted or otherwise the face image not required for the subsequent inference process or link information production can be deleted, and therefore the detailed process is concentrated on the object.

Further, the second operating unit may have the function of correcting the extraction result as well as the function of designating the deletion of the face image extraction result. Thus, the photographer can confirm whether the face image has been correctly extracted or not, and in the case where an error exists, can correctly set again the position and size of the face image by the correcting operation. This can avoid an otherwise possible case in which an erroneous inference process is executed due to an error of the face image extraction thereby leading to an error in the subsequent process.

An image pickup device according to a still further embodiment of the invention comprises a third operating unit for operation to correct the inference information obtained by the inference process of the inference part, wherein the information processing part includes a part for correcting the inference information in accordance with the correcting operation of the third operating unit. The third operating unit may include a display unit for displaying the image picked up and the inference information for the image and a user interface for receiving the operation of correcting the inference information on the display screen of the display unit.

According to this embodiment, any error which may occur in the inference process is corrected as right information by the correcting operation. The image pickup conditions not suitable for the object can thus be prevented from being set by an erroneous inference process.

The operation of correcting the inference information may include the operation of adding new information not inferred, as well as the operation of correcting the error of the inference result. The information designated for addition may include the correcting process difficult to execute at the time of image pickup operation (the process requiring a considerable length of processing time such as smoothing a contour line, extracting and erasing a defect of the face surface or correcting the color taste and brightness of the skin color in detail). By doing so, not only the error of the inference result can be corrected, but also the link information including the detailed contents of image correction can be produced in accordance with the preference of the photographer or the object person. Thus, the image picked up can be corrected in more detail.

An image pickup device according to a yet further embodiment of the invention comprises a fourth operating unit for correcting the image pickup conditions adjusted by the image pickup conditions adjusting part, wherein the image pickup conditions adjusting part includes a part for readjusting the image pickup conditions in accordance with the correcting operation by the fourth operating unit.

The fourth operating unit is for correcting the image pickup conditions adjusted by the image pickup conditions adjusting part, and this function may be added to the normal operating unit for adjusting the stop and the focal length. According to this embodiment, the image pickup conditions adjusted based on the inference information can be finely adjusted, so that an image can be picked up under more appropriate image pickup conditions.

In an image pickup device according to another embodiment of the invention, the information processing part includes a part for determining the direction of the face of the object in the image stored in the memory or the storage medium based on the result of extraction by the face image extraction part, and a part for rotating the image in such a manner that the determined face direction, if different from a predetermined reference direction, comes to agree with the predetermined reference direction.

According to this embodiment, depending on the direction of the image pickup device in which the photographer picks up an image, the face direction can be stored to the reference direction by rotational correction. As a result, the image picked up can be displayed with the object kept in the same direction. Also in the case where a plurality of images are printed on a single sheet of paper, no correcting operation is required to set the object in direction.

Further, the image pickup device according to the first aspect of the invention may be embodied as a device having the configuration described below.

First, an image pickup device according to a first embodiment comprises a feature amount storage part for storing the feature amount of the face image extracted, wherein the face image extraction part includes a specified image extraction part for extracting an image area having the feature amount of a specified face image stored in the feature amount storage part from the image picked up by the image pickup unit.

According to this embodiment, the face image extraction process can be executed by extracting the image area including the same feature amount as the specified face image extracted in the past. In picking up images of the same person as an object successively, therefore, the face image of the object can be extracted within a short time.

The feature amount storage part is not necessarily required to store the feature amounts of the face images of all the objects picked up in the past, but only the feature amounts acquired up to a predetermined time before or the feature amounts acquired for a predetermined number of the latest images.

An image pickup device according to still another embodiment of the invention comprises an object storage part for storing the feature amount of the face image of a specified object, wherein the information processing part is so configured that the feature amount of the face image extracted by the face image extraction part is compared with the feature amount stored in the object storage part, and in the case where the comparison shows that the extracted face image is associated with the specified object, the link information including the inference information obtained by the inference process of the inference part and the information for identifying the specified object is produced and stored in the memory or the storage medium together with the image picked up by the image pickup unit.

According to this embodiment, upon extraction of the face image of a specified person, the link information including the information for identifying the same person (such as the name and the ID number) can be produced and stored together with the image thereof. After picking up the image, therefore, the person to be corrected is specified and corrected based on the ID information of the person. Further, special points of correction for the same person can be designated and the detailed correction can be carried out. Also, since the image is linked with the ID information of individual persons, the images picked up can be put in order and the photos printed easily.

Incidentally, the ID information may be input before or after picking up the image.

The image pickup device according to this embodiment preferably comprises an operating unit for giving an instruction to register the face image extracted by the image extraction part and inputting the personal ID information, wherein the information processing part includes a part for registering in the object storage part the feature amount of the face image designated by the operating unit in correspondence with the personal ID information input.

By doing so, a specified one of the persons whose images have been picked up can be designated and the feature amount of the face image thereof can be registered together with the personal ID information.
Subsequently, each time the image of the registered person is picked up, the personal ID information can be stored as linked to the image of the particular person. The face image to be registered can be designated not only immediately after picking up the image thereof but also by retrieving the image stored in the memory or the storage medium.

In a preferred embodiment of the image pickup device according to the second aspect of the invention, the control unit includes a part for receiving the input of the information required for adjusting the optimum image pickup conditions and the ID information of the object in accordance with the image pickup operation of a predetermined object for registration in the registration part and storing the input information in the registration part together with the face image of the object.

In the image pickup device according to this embodiment, for example, an image picked up by the image pickup unit is displayed, the operation for adjusting the image pickup conditions is performed and the input of the ID information of the object received. In this case, the parameter indicating the feature amount of the face image contained in the image after the adjust operation can be registered as the information required for adjusting the optimum image pickup conditions.

In the case where the image pickup device has the function of correcting the picked-up image by the correcting operation, the input processing of the information can be executed after picking up the image as well as at the time of picking up the image. This operation of processing the input includes the operation of giving an instruction to correct the face image picked up and the operation of inputting the ID information, so that the parameter indicating the feature amount of the face image corrected is registered as the information required for adjusting the optimum image pickup conditions.

By inputting the information for registration in the registration part using the image picked up in this way, the object itself can execute the input process, and therefore the image can be picked up by adjusting the image pickup conditions in accordance with the preference of the object itself.

The image pickup device having the aforementioned various configurations is a portable communication terminal (a mobile telephone, etc.) having the camera function as well as an ordinary digital camera or a digital video camera. Also, the image pickup device may be combined with a printer as a photo seal vending machine.

According to still another aspect of the invention, there is provided a program executed by the image pickup device or a method executed by the image pickup device.

### BRIEF DESCRIPTION OF THE DRAWINGS

Fig. 1 shows a block diagram of a configuration of a digital camera according to this invention.

Fig. 2 shows the function set in the CPU of the digital camera of Fig. 1.

Fig. 3 shows an example of display of the face area extraction result.

Fig. 4 shows an example configuration of the link information.

Fig. 5 shows an example parameter for setting the face area.

Fig. 6 shows a flowchart of the steps of controlling the process of picking up an image of a person.

Fig. 7 shows a histogram of the brightness distribution in the face area for each difference in race and lighting conditions.

### DESCRIPTION OF THE PREFERRED EMBODIMENTS

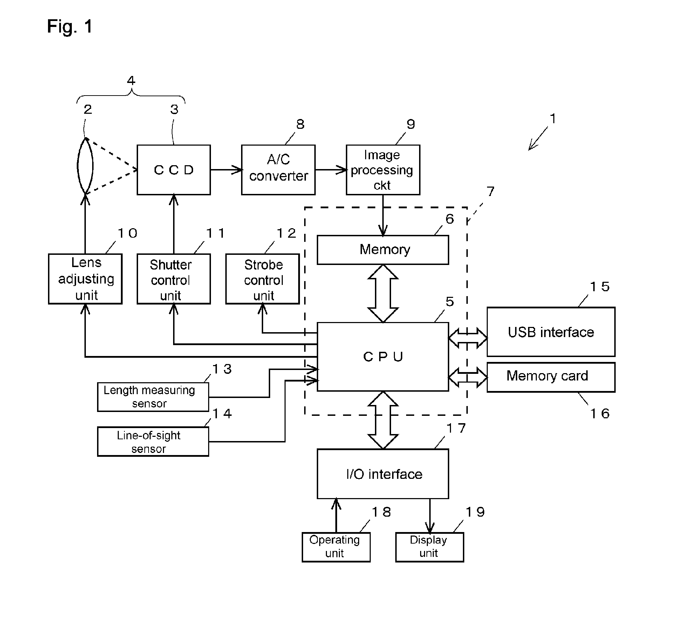

Fig. 1 shows a configuration of a digital camera according to this invention.

A digital camera 1 mainly comprises an image pickup unit 4 including a lens unit 2 and a CCD 3 and a control unit 7 for retrieving the image from the CCD 3 and generating a digital image in the final form. The digital camera 1 has further built therein peripheral circuits such as an A/D converter 8, an image processing circuit 9, a lens adjusting unit 10, a shutter control unit 11, a strobe control unit 12, a length measuring sensor 13, a line-of-sight sensor 14, a USB interface 15 and an input/output interface 17. A memory card 16 is adapted to be removably connected to the control unit 7.

The control unit 7 is configured of a CPU 5 and a nonvolatile memory 6 such as a flush memory (hereinafter referred to simply as the memory 6). The memory 6 has stored therein a program required for the operation of the CPU 5, a data base for storing various reference tables and templates used in the process and image data output from the image processing circuit 9 and the CPU 5.

The lens adjusting unit 10 includes a focal point adjusting mechanism and a stop adjusting mechanism of the lens unit 2. The shutter control unit 11 is for supplying a drive pulse to the CCD 3 to store the charge, and the strobe control unit 12 is for adjusting the luminous timing and the light amount of a strobe not shown. The focal point, the stop adjust value, the interval of the drive pulses applied to the CCD 3 and the luminous amount of the strobe are adjusted in accordance with the control signal from the CPU 5. The A/D converter 8 retrieves the outputs sequentially from the pixels of the CCD 3 and converts them into digital signals for the color components of R, G and B. The image processing circuit 9 includes a set of a plurality of shift registers and flip-flops, and upon receipt of the output from the A/D converter 8, generates a full-color image data having a combined intensity of R, G and B for each pixel. The image data thus generated are stored in the memory 6 and processed as predetermined by the CPU 5.

The length measuring sensor 13 is for measuring the distance to an object and either of the passive type using trigonometry or the active type using infrared light. The line-of-sight sensor 14 radiates the infrared light on the eye balls of a photographer to detect the direction of the line of sight of the photographer by the measurement using the reflected light image. The measurement result of the sensors is input to the CPU 5 and used to generate a preview image before the main image pickup process or to set the image pickup parameters for the main image pickup process.

The USB interface 15 is an interface conforming with the Universal Serial Bus Standard and used for transferring the image stored in the memory 6 or the memory card 16 to an external device such as a personal computer.

The input/output interface 17 is connected with the operating unit 18 and the display unit 19.
The operating unit 18 and the display unit 19 are arranged on the body surface of the digital camera 1. The display unit 19 is used to display an image in process or a screen for inputting the information. The operating unit 18 includes the operating keys for inputting information and a shutter button.

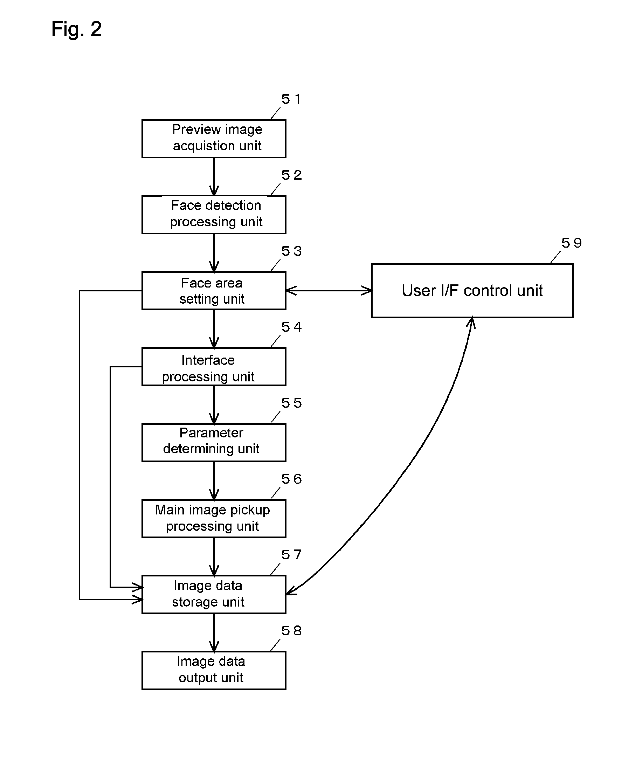

In this configuration, the functions shown in Fig. 2 are set in the CPU 5 by the program stored in the memory 6. These functions permit the digital camera 1 according to this embodiment to pick up an image of a person as an object by estimating the race, age and sex of the object person in a predetermined image pickup area, and thus by determining the image pickup parameters suitable to the result of the estimation, the main image pickup process can be executed.

According to this embodiment, the adjust values including the shutter speed, stop and focal length and whether the strobe is used or not are always determined as image pickup parameters. Further, in the case where the strobe is used, the luminous intensity thereof is set.

In Fig. 2, the preview image acquisition unit 51 generates a preview image of the image pickup area by controlling the lens adjusting unit 10 and the shutter control unit 11 (the strobe is not desirably used when acquiring the preview image). A face detection processing unit 52 detects a face image from the preview image acquired by the preview image acquisition unit 51. A face area setting unit 53 sets an area of predetermined size including the face image as a processing area (hereinafter referred to as "the face area") in accordance with the result of detection of the face image thereby to produce an area setting parameter described later.

An inference processing unit 54 infers the race, age and sex of the object based on the feature amount in the face area that has been set. A parameter determining unit 55 determines the image pickup parameters suitable for the result of the inference processing. According to this embodiment, the presence or absence of back light is inferred in addition to the race, age and sex described above. The result of inference of these four factors and the distance to the object are combined variously in advance. For each combination, a table with optimum image pickup parameters set therein is produced and registered in the memory 6. In the process of determining the image pickup parameters, the table is accessed with the inference result and the measurement of the length measuring sensor 13 thereby to extract the optimum image pickup parameters.

A main image pickup processing unit 56 controls the lens adjusting unit 10, the shutter control unit 11 and the strobe control unit 12 based on the image pickup parameters determined by the parameter determining unit 55 thereby to execute the main image pickup process (using the strobe, if required). The image data storage unit 57 generates an information link image in which the image obtained in the main image pickup process is linked to the processing result of the face area setting unit 53 and the inference processing unit 54, and stores the information link image in the memory 6 or the memory card 16. The image data output unit 58 appropriately reads the information link image in store, and outputs them externally through the USB interface 15.

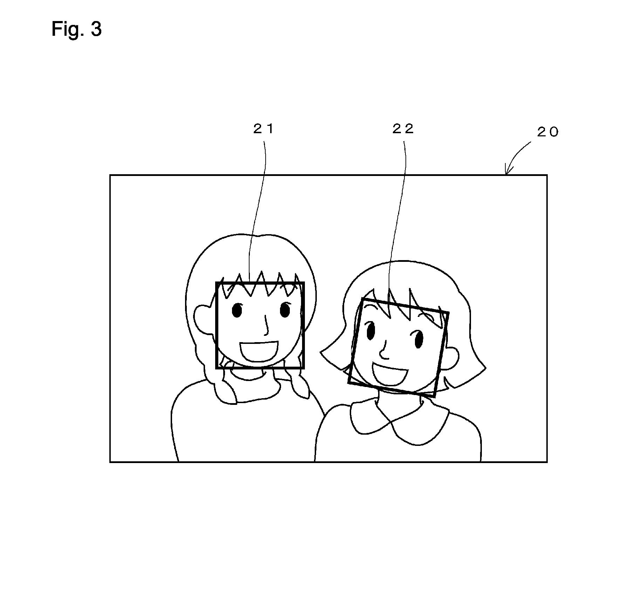

The user interface control unit 59 checks the face area setting result and the link information of the information link image, and corrects an error, if any, or inputs additional information. According to this embodiment, a preview image including the face area setting result is displayed on the display unit 19 at the end of the face area setting process. Fig. 3 shows an example display, in which frame images 21, 22 corresponding to the boundary lines of the face areas are displayed on the face images of the persons in the preview image 20.

With this display, the user interface control unit 59 sets an operating screen for performing the operation of correcting the setting of the face area and the operation of setting a new face area, accepts various operations and outputs the contents of each operation to the face area setting unit 53. The face area setting unit 53, in accordance with the contents of each operation, corrects the place and size of the face area thus set, deletes an unnecessary face area and sets a new face area.

Further, the user interface control unit 59, when the information link image is stored in the image data storage unit 57, displays the image and the link information contained in the information link image.
At the same time, an operating screen for correcting the link information or inputting additional information is set to accept various corrections and inputs. The contents of the correction and the input information are delivered to the image data storage unit 57. The image data storage unit 57 corrects the corresponding information based on the correction of the information link image, and adds the additionally input information to the existing link information.

The correcting information is mainly for correcting an error of the inference process. The additional information is input by the operation of correcting an option that cannot be performed by the standard correction by the inference process or the operation of inputting the personal information such as the name of the object (surname or given name, or nick name).

Further, the digital camera 1 according to this embodiment has the function of correcting the picked-up image such as the brightness or the contour in accordance with the designating operation of the user. When this correcting operation is performed in the device, the image data storage unit 57 executes the process of adding the correction-related information to the link information.

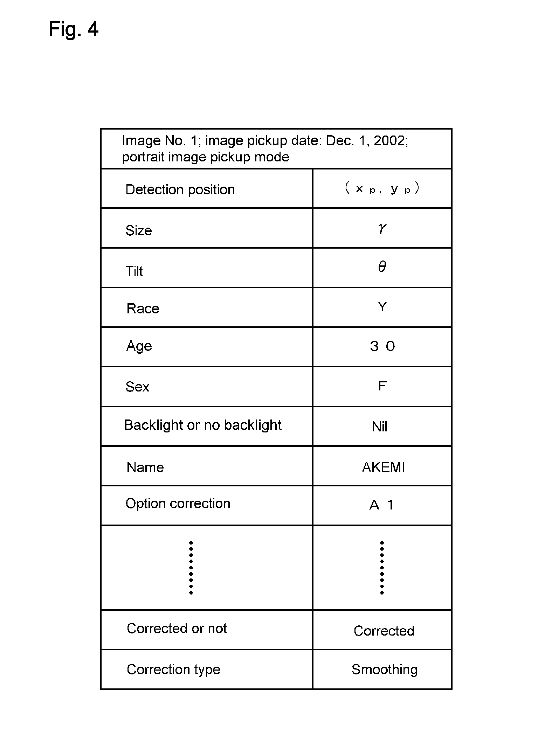

Fig. 4 shows an example of a configuration of the link information in the information link image.

In Fig. 4, the uppermost column corresponds to the index information in the link information and has set therein the image number, the image pickup data and the image pickup mode. The image number is a serial number assigned in the order of generation of images by the image pickup operation. The image pickup mode has a plurality of modes including the portrait image pickup mode and the landscape image pickup mode. Only in the case where the portrait image pickup mode is selected, the face detection process and the inference process are executed to set specific link information.

The link information contains the information indicating the result of setting the face area such as the coordinate (xₚ, yₚ) of the face image detection position, the size r of the face image and the face tilt angle θ, and the information indicating the inference result such as the race, age, sex and the presence or absence of back light. Further, the link information contains additional information including the personal information such as the name of the object and the information including the item of the selected option correction, whether the correction is made or not in the device and the contents of correction.

The link information in store may contain the image pickup parameters used, in addition to those shown. Also, with regard to the image picked up in other than the portrait image pickup mode, the information link image is generated which has only the index information with the image number, the image pickup date and the image pickup mode.

The detection position (xₚ, yₚ), the face size r and the fact tilt angle θ contained in the link information are used as parameters for setting the face area suitable for the particular face image in the case where the same face image is corrected in detail after the main image pickup process.

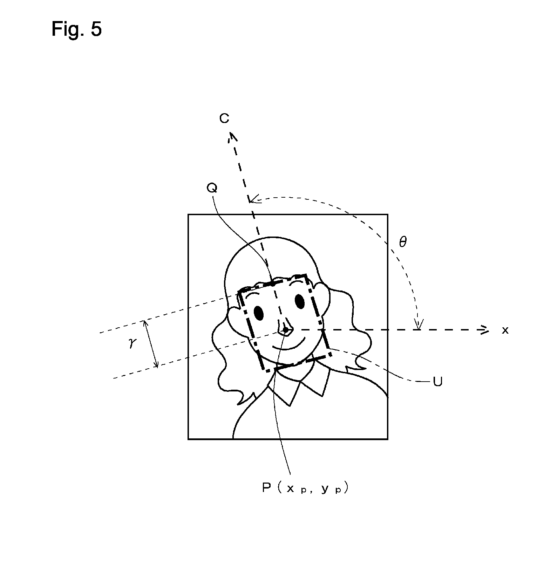

Fig. 5 shows a specific example of each parameter. In the shown case, a feature point P corresponding to the highest nose position is extracted from the feature points of the face image, and the coordinate (xₚ, yₚ) of this point P is used as a face detect position. Also, using this point P as an origin, the boundary between the forehead and the hair is searched for in each direction, and a point Q associated with the shortest distance from point P is determined from the feature points corresponding to the boundaries thus searched for. The distance between point Q and point P is set as the face size r. Further, a vector C directed from point P to point Q is set, and the angle that the vector C forms with the horizontal direction of the image (x axis) is measured as a face tilt angle θ.

In Fig. 5, character U designates an example of the face area set by each parameter. The size of this face area U is determined based on the face size r, and set in such a manner that the center thereof corresponds to point P and the main axis is tilted by θ with respect to the x axis.

The link information shown in Fig. 4 can be stored in the memory card 16 or output to an external device by the function of the image data output unit 58. Once the information link image containing this link information is fetched into a personal computer or the like, therefore, the face area to be processed can be automatically set by the parameters (xₚ, yₚ), r and θ. As a result, detailed and proper correction process can be executed based on the inference result and the option correction items.

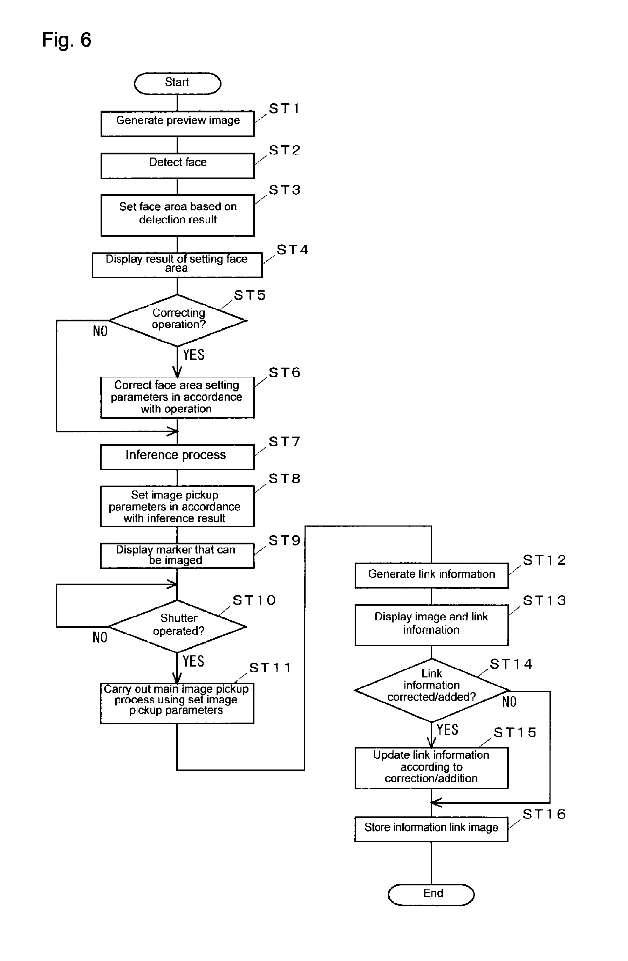

Fig. 6 shows the steps of the control operation performed by the CPU 5 in accordance with the operation of taking a photo in portrait image pickup mode.

This process is started at the time point when the shutter button is pressed halfway and the line of sight of the photographer is set by the measurement of the line-of-sight sensor 14. First in step ST1, the CCD 3 is driven by setting the appropriate image pickup conditions based on the measurement of the line-of-sight sensor 14 and the length measuring sensor 13, and a preview image is generated from the output of the CCD 3. The preview image thus generated is stored in the working area of the memory 6, and the process proceeds to step ST2 for executing the face detection process.

In the face detection process, a search area of predetermined size is scanned on the preview image thereby to search for the feature points of the face image. According to this embodiment, a table indicating the standard face image size corresponding to each distance to the object is set in the memory 6. By accessing the table with the measurement of the length measuring sensor 13, the approximate size of the face image appearing on the preview image is predicted, and in accordance with the particular size, the size of the search area is adjusted. Also, based on the measurement of the line-of-sight sensor 14, the scanning of the search area is confined to a predetermined range around the point where the photographer has set the line of sight. At the same time, using the method disclosed in Patent Reference 4, the highly accurate face detection process is executed within a short time.

In step ST3, the various parameters shown in Fig. 5 are extracted for the face image detected, and based on these parameters, the face area U is set. Further, in step ST4, the result of setting the face area is displayed as a frame image in the preview image on the display unit 19. The image thus displayed is corrected by the photographer, and in accordance with this operation, the parameters for setting the face area are corrected (ST5, ST6).

The correcting operation in step ST5 includes the operation of changing the position and size of the set face area, the operation of deleting the face area and the operation of setting a new face area. The process executed in step ST6, on the other hand, includes the process of changing the value of the parameters for setting the face area, the process of deleting the parameters and the process of setting a new parameter.

When the photographer performs the final determining operation after correcting the face area, the process proceeds to step ST7 to execute various inference processes for the face area finally determined. In the case where the photographer performs the final determining process immediately without the correcting operation on the preview image on display in step ST4, the answer in step ST5 is NO, and the process proceeds to step ST7 for executing the inference process for the face area set in step ST3.

In step ST7, the race, age, sex and the presence or absence of back light are estimated for the set face area. The race estimation process can be executed based on the cited reference Gregory Shakhnarovich, Paul A. Viola, Baback Moghaddam: "A Unified Learning Framework for Real Time Face Detection and Classification". According to this embodiment, however, the race and the presence or absence of back light are estimated at the same time using the brightness distribution in the face area to shorten the processing time.

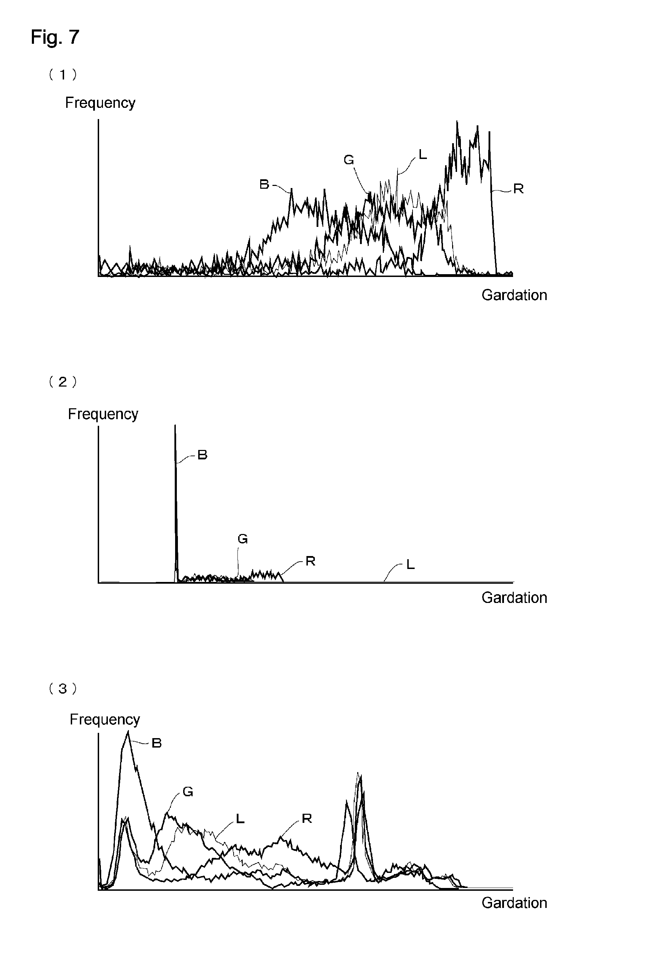

Fig. 7 shows an example of histogram for each of the color data of R, G and B and the lightness L (arithmetic average of R, G and B) for three different cases of objects and lighting environments. The histogram is drawn in gradation scale, and the brightness increases progressively rightward in the page.

Fig. 7(1) is a histogram representing a case in which an image of a yellow people is picked up in the proper lighting environment. In this histogram, the distribution toward a higher brightness is comparatively greater for each color data. Especially, the intensity of the red component is emphasized.

Fig. 7(2) is a histogram representing a case in which the image of the same yellow people as in Fig. 7(1) is picked up in back light. In this histogram, the appearance ratio of each color data is considerably lower than in Fig. 7(1) and the distribution is concentrated on dark side.

Fig. 7(3) is a histogram representing a case in which the image of a black people is picked up in the proper lighting environment. In this histogram, the distribution has a peak on both dark and bright sides (the dark side is considered to correspond to the skin, and the bright side to the eyes and teeth).

According to this embodiment, a template of brightness histogram is prepared for a plurality of image pickup environments having different lighting conditions for each race, and the histogram extracted for the face area to be processed is collated with each template. In this way, the race and the presence or absence of back light is estimated. In the case where this histogram is used for the determining process by extracting also the brightness distribution of a local area such as the eyes or mouth as well as the whole face area, a more accurate estimation result can be obtained.

Incidentally, the age and sex are estimated, as described in the cited reference Kiyoshi Hosoi, Erina Takigawa and Masato Kawade: "Sex and Age Estimation System by Gabor Wavelet Transform and Support Vector Machine", by a method in which the feature amount of the feature point for each organ is applied to an estimation system called the support vector machine. Nevertheless, the invention is not necessarily limited to this method.

Returning to Fig. 6, at the end of a series of the inference process, the set table in the memory 6 is accessed with the inference result and the measurement of the length measuring sensor 13 in step ST8 thereby to determine the image pickup parameters suitable for the inference result and the distance to the object.

Among the image pickup parameters, the focal length of the lens 2 is determined also taking the face image extraction result into consideration. In this way, the state can be set in which the face of the object is just in focus.

In step ST9, a marker indicating that the image pickup operation is possible is displayed on the display unit 19. In accordance with this display, the photographer operates the shutter button. The answer in step ST10 turns YES, and the main image pickup process is executed using the set image pickup parameters in step ST11.

After that, the link information having the configuration shown in Fig. 4 is generated in step ST12. The link information in this stage has yet to contain the information such as the name and the option correction, but only the index information, the face area setting parameter and the inference result are set.

In step ST13, the image obtained in the main image pickup process and the link information are displayed on the display unit 19. In the case where the input operation for correcting or adding the link information or the operation of designating the image correction is performed on the information on display, the answer in step ST14 turns YES, and the process proceeds to step ST15, where the link information is corrected or the additional information is set, as the case may be, in accordance with the input operation.

In the case where the final determining operation is performed subsequently, the process proceeds to step ST16, where the final image link information is stored in the memory 6 or the memory card 16. In the case where the final determining operation is performed immediately without correcting or adding the information displayed in step ST13, on the other hand, the answer in step ST14 turns NO, and the process proceeds to step ST16, so that only the information link image having only the basic link information generated in step ST12 is stored.

In displaying or correcting the link information, each information may be displayed sequentially by the switching operation, and the correcting operation is accepted each time of display. In adding the information, on the other hand, assume that the correction of an option is designated. In such a case, a user interface indicating a menu of correction items is prepared for accepting an item selection. In this way, the additional information can be input or recognized easily.

In the process described above, the information link image is displayed and the correction or additional input is accepted immediately after the image pickup operation. However, the timing of display and correction is not limited to this method. After an image is picked up, for example, the information link image having the basic configuration is generated and held temporarily, so that the image and the link information are displayed in response to the image call operation at a predetermined time point and the input operation for correction or addition may be accepted. In this case, the link information stored in the preceding process is rewritten in accordance with the correction.

Further, in the above-mentioned process, the focal length of the lens 2 is adjusted in accordance with the detection result at the end of the face image detection in step ST2, and the preview image is retrieved again. By doing so, the subsequent face image setting process and inference process can be carried out with a face image having clear face features of the object. Therefore, the process of higher accuracy can be executed.

In the process described above, the race, age and sex having a large effect on the manner in which the image of the object face is picked up are estimated, and in accordance with the result of estimation, the image pickup parameters are set to conduct the main image pickup process. Even in the case where an image is picked up at the same place under the same lighting conditions, therefore, the image pickup conditions are varied from one object to another. Thus, a clear face image similar to the real image of each object can be generated.

Next, the correcting process using the information link image generated in the steps described above is explained. This correcting process is executed by an editing device such as a personal computer which fetches the information link image through the memory card 16 or the USB interface 15. In the editing device, a correcting parameter or algorithm is set in advance for a plurality of classes of each item of race, age and sex (the parameters and the algorithm are hereinafter referred to as "the correction data"). The suitable correction data are selected from the inference result contained in the link information of the image to be processed, and the process based on the correction data is executed. As a result, the face image can be corrected in different ways according to the difference in race, age and sex.

As an example, the reddish part due to pimples or the like is detected for female persons in teens or twenties and replaced by the same color as the surrounding part or corrected to increase the whiteness of the skin. For male persons in twenties or thirties, on the other hand, the skin color is corrected to the color of sunburn, while the part of small wrinkles or freckles is detected and replaced with the same state as the other parts for female persons in forties. In this way, what is considered most desirable correction is carried out for persons of different age and sex.

The correction data of this type can be freely changed, and therefore the contents thereof can be changed in accordance with the fashion or season.

In the case where a plurality of persons exist as objects of the digital camera 1, the inference process is executed for each object, after which any of the image pickup parameters corresponding to each inference result is selected or the parameters are averaged out for each person to conduct the main image pickup process. Also in this case, the detailed correction process may be executed using the link information for each object after image pickup operation, thereby correcting the errors due to the difference in the inference result between the objects.

Further, in the case where the link information contains the option correction items, the correction process can be carried out in accordance with each item. Thus, the detailed correction can be conducted in accordance with the desire of the object and the photographer. Also, in the case where the personal information such as the name is contained in the link information, a data base of information for the correction of each person can be constructed in the editing device. This data base makes it possible to correct the image of a person in registration in the same way as before.

The link information shown in Fig. 4 also contains the information as to whether the image has been corrected by the camera and the information indicating the specifics of the correction. Based on these information, the device can be set not to duplicate the correction carried out by the camera.

According to this embodiment, the four factors including the race, age, sex and the presence or absence of back light are estimated for the detected face image. As an alternative, only one of the three factors except for the back light may be estimated while the remaining factors may be set as addition to the link information. Especially, as far as the main object is limited to a predetermined race (yellow people, for example), only the age and sex are estimated, while in the case where the black or white people is an object, the information about the particular race is added to the link information.

Further, mechanism and program for executing the following processes can be built in the digital camera 1:
(1) The features of the face image detected by the preceding image pickup process is stored, so that the image area having the same features is searched for in the next image pickup process. Especially, in the case where the time interval is short between image pickup processes, the image of the same person is liable to be picked up successively, and therefore this method can be used to detect the face image in a short length of time. An application of this method to the face detection process disclosed in Patent Reference 4 described above can detect the face image of the same person with high accuracy. Nevertheless, also in the method of detecting the skin color area, the process can be executed at higher speed by determining an area having a skin color similar to the one detected in the preceding image pickup process as an object of detection.

(2) In the case where the strobe is used in the main image pickup process, the link information is rendered to contain the information about the use of the strobe. By doing so, the correction after the image pickup process is possible taking the lightness balance between the face image and the surrounding area.

(3) A data base containing the correspondence between the link information including the personal information described above and the result of extracting the feature points of the face image is stored in the memory 6. In this way, an object of a person whose image has ever been picked up can be identified by accessing the data base for the features of the extracted face image. Further, using the link information registered in the data base, the information link image can be easily set.

Also in the editing device, the features and the correction data of the face image of a person once corrected are stored in a data base. After that, therefore, a person can be identified by comparing the result of extracting the feature points contained in the newly input link information with the data base. Further, based on the correction data registered in the data base, the correction suitable for a particular person can be carried out.

(4) The GPS, gyro or the geophysical sensor is built in to detect the place of image pickup and the camera position, and the detection data are contained in the link information. This information can be printed with the image or distributed at the time of editing the image. Also, since the direction of image pickup operation is known, the lighting conditions can be determined with the time information. Thus, whether the image has been picked up in back light and other conditions can be determined for correction. Also, the images can be put in order based on the image pickup positions.

(5) With the geophysical sensor described in (4) above, a network communication function such as the internet is built in, and the weather conditions at the place of image pickup are fetched from a meteorological server and used for setting the image pickup parameters. Also, the weather conditions can be contained in the link information and used for correction at the time of editing process.

(6) As in (5) above, the communication function with a network is built in, and the acquired information link image is transmitted to an image editing server. In the image editing server, the image transmitted is corrected based on the link information, the processed image is returned or printed and sent to the distributor.

In the case where the functions described in (4), (5) and (6) above are provided, the digital camera 1 is built in the portable telephone. Then, the image pickup device can be easily designed using the communication functions set in the portable telephone.

(7) After picking up an image of a given person a plurality of times, an image considered most suitable by the person is selected, and the feature amount of the face image in the particular image and the parameters defining the face color (gradation and lightness of R, G and B) are registered in the memory 6 together with the name of the person, while at the same time incorporating the mode for using the registered information into the portrait image pick up mode. When the mode for using the registered information is selected, the face image is detected, and the feature amount of the particular face image is compared with the registered information to estimate the object. Then, the image pickup conditions are adjusted in such a manner that the color of the face image already detected may be as similar to the registered face color of the estimated object as possible.

With this configuration, an image can be picked up by automatically setting the image pickup conditions corresponding to the preference of each object. Therefore, a satisfactory photo of the object can be easily taken and the utility of the digital camera is improved. Even in the case where an image is picked up by this method, an object can be designated with the name of a person and the correction suitable for the particular object can be made in an external editing device by generating the information link image having the link information including the name of the object person and the image pickup conditions.

It will thus be understood from the foregoing description that according to this invention, an image can be picked up by setting detailed image pickup conditions for the race, age and sex of the object, and therefore a face image very similar to a clear, real image of each object can be generated. Also, by picking up an image by setting the image pickup conditions meeting the preference of each object, an image satisfactory to each object can be easily generated. Further, the face image after being picked up can be easily corrected in detail in a way meeting the desire of each person based on the link information.

## Claims

1. An image pickup device comprising an image pickup unit including a lens and an image sensor, and a control unit for processing the image picked up by the image pickup unit and storing the processed image in an internal memory or a predetermined storage medium,
wherein the control unit includes
a face image extraction part for extracting the face image contained in the image picked up by the image pickup unit,
an inference part for executing the process of inferring the attributes of a person constituting an object based on the feature amounts in an image area including the face image extracted,
an image pickup conditions adjusting part for adjusting the image pickup conditions for the image pickup unit based on the result of inference in the inference part, and
an information processing part for storing in selected one of the memory and the storage medium the image obtained under the image pickup conditions adjusted by the image pickup conditions adjusting part.

2. The image pickup device according to claim 1,
wherein the inference part includes an inference part for executing the inference of at least one of the race, age and sex as the attributes.

3. The image pickup device according to claim 1,
wherein the information processing part includes a part for producing the link information containing the position of the face image extracted by the face image extraction part and the inference information obtained by the inference process executed by the inference part, and
wherein the link information is stored in selected one of the memory and the storage medium together with the image picked up by the image pickup unit.

4. The image pickup device according to claim 1, further comprising a distance recognition part for recognizing the distance to an object,
wherein the face image extraction part includes a part for specifying the size of the face image to be extracted, based on the result of recognition by the distance recognition part.

5. The image pickup device according to claim 1,
wherein the control unit includes the focal length adjusting part for adjusting the focal length of a lens of the image pickup unit in accordance with the result of extraction by the face image extraction part.

6. The image pickup device according to claim 1, further comprising a first operating unit for designating the range of extracting a face image,
wherein the face image extraction part includes a part for limiting the face image extraction area in the image picked up by the image pickup unit in accordance with the designating operation of the first operating unit.

7. The image pickup device according to claim 1, further comprising a second operating unit for designating the deletion of the result of extracting a predetermined part of the face image extracted,
wherein the face image extraction part includes a part for updating the result of extracting the face image in accordance with the designating operation of the second operating unit.

8. The image pickup device according to claim 1, further comprising a third operating unit for performing the operation of correcting the inference information obtained by the inference process of the inference part,
wherein the information processing part includes a part for correcting the inference information in accordance with the correcting operation of the third operating unit.

9. The image pickup device according to claim 1, further comprising a fourth operating unit for correcting the image pickup conditions adjusted by the image pickup conditions adjusting part,
wherein the image pickup conditions adjusting part includes a part for readjusting the image pickup conditions in accordance with the correcting operation of the fourth operating unit.

10. The image pickup device according to claim 1,
wherein the information processing part includes a part for determining the direction of the face of an object in the image based on the result of extraction of the image stored in selected one of the memory and the storage medium by the face image extraction part, and a part for rotating the image in such a manner that the face direction conforms with a predetermined reference direction in the case where the determined face direction is different from the reference direction.

11. The image pickup device according to claim 1, further comprising a feature amount storage part for storing the feature amount of the face image already extracted,
wherein the face image extraction part includes a specified image extraction part for extracting an image area including the feature amount of the specified face image stored in the feature amount storage part from the image picked up by the image pickup unit.

12. The image pickup device according to claim 1, further comprising an object storage part for storing the feature amount of the face image of a specified object,
wherein the information processing part compares the feature amount of the face image extracted by the face image extraction part with the feature amount stored in the object storage part, so that in the case where the comparing process shows that the extracted face image is that of the specified object, the link information containing the inference information obtained by the inference process of the inference part and the information for identifying the specified object is produced and stored in selected one of the memory and the storage medium together with the image picked up by the image pickup unit.

13. An image pickup device comprising an image pickup unit including a lens and an image sensor, and a control unit for processing the image picked up by the image pickup unit and storing the processed image in selected one of an internal memory and a predetermined storage medium,
wherein the control unit includes
a registration part for holding the feature amount of the face image of each of a predetermined number of objects and the information required for adjusting the optimum image pickup conditions in correspondence with the identification information unique to the object,
a face image extraction part for extracting the face image contained in the image picked up by the image pickup unit,
an inference part for inferring the object by comparing the feature amount of the face image extracted by the face image extraction part with the information registered in the registration part,
an image pickup conditions adjusting part for adjusting the image pickup conditions for the image pickup unit using the registered information of the object estimated by the inference part, and
an information processing part for storing in selected one of the memory and the storage medium the image obtained under the image pickup conditions adjusted by the image pickup conditions adjusting part.

14. The image pickup device according to claim 13,
wherein the control unit includes a part for receiving the input of the information required for adjusting the optimum image pickup conditions and the identification information of the object in response to the image pickup operation of a predetermined object for registration in the registration part, and storing the input information in the registration part together with the face image of the object.

15. The image pickup device according to claim 13,
wherein the information processing part includes a part for producing the link information containing the position of the face image extracted by the face image extraction part and the inference information obtained by the inference process executed by the inference part, and
wherein the link information is stored in selected one of the memory and the storage medium together with the image picked up by the image pickup unit.

16. The image pickup device according to claim 13, further comprising a distance recognition part for recognizing the distance to an object,
wherein the face image extraction part includes a part for specifying the size of the face image to be extracted, based on the result of recognition by the distance recognition part.

17. The image pickup device according to claim 13,
wherein the control unit includes a focal length adjusting part for adjusting the focal length of the lens of the image pickup unit in accordance with the result of extraction by the face image extraction part.

18. The image pickup device according to claim 13, further comprising a first operating unit for designating the range of extraction of the face image,
wherein the face image extraction part includes a part for limiting the face image extraction area in the image picked up by the image pickup unit in accordance with the designating operation of the first operating unit.

19. The image pickup device according to claim 13, further comprising a second operating unit for designating the deletion of the result of extracting a predetermined part of the face image extracted,
wherein the face image extraction part includes a part for updating the result of extracting the face image in accordance with the designating operation of the second operating unit.

20. The image pickup device according to claim 13, further comprising a third operating unit for performing the operation of correcting the inference information acquired by the inference process of the inference part,
wherein the information processing part includes a part for correcting the inference information in accordance with the correcting operation of the third operating unit.

21. The image pickup device according to claim 13, further comprising a fourth operating unit for correcting the image pickup conditions adjusted by the image pickup conditions adjusting part,
wherein the image pickup conditions adjusting part includes a part for readjusting the image pickup conditions in accordance with the correcting operation of the fourth operating unit.

22. The image pickup device according to claim 13,
wherein the information processing part includes a part for determining the direction of the object face in the image stored in selected one of the memory and the storage medium based on the result of extraction by the face image extraction part, and a part for rotating the image in such a manner that the direction of the face conforms with a predetermined reference direction in the case where the determined direction of the face is different from the predetermined reference direction.

23. A program to be executed by an image pickup device comprising an image pickup unit including a lens and an image sensor, and a control unit for processing the image picked up by the image pickup unit and storing the processed image in selected one of an internal memory and a predetermined storage medium, the program comprising:
a step of extracting the face image contained in the image picked up by the image pickup unit;
a step of inferring the attributes of a person constituting an object based on the feature amount in an image area including the face image upon extraction of the face image;
a step of adjusting the image pickup conditions for the image pickup unit based on the result of inference in the inference step; and
an information processing step of storing in selected one of the memory and the storage medium the image acquired under the image pickup conditions adjusted by the image pickup conditions adjusting step.

24. A program to be executed by an image pickup device comprising an image pickup unit including a lens and an image sensor, and a control unit for processing the image picked up by the image pickup unit and storing the processed image in selected one of an internal memory and a predetermined storage medium, the program comprising the steps of:
registering the registration information on the feature amount of the face image of each of a predetermined number of objects and the information required for adjusting the optimum image pickup conditions in correspondence with the identification information unique to the object;
extracting the face image contained in the image picked up by the image pickup unit;
estimating the object by comparing the registration information with the feature amount of the face image extracted in the face image extraction step;
adjusting the image pickup conditions for the image pickup device using the registration information of the object estimated in the estimation step; and
storing in selected one of the memory and the storage medium the image acquired under the image pickup conditions adjusted in the image pickup conditions adjusting step.

25. A method to be executed by an image pickup device comprising an image pickup unit including a lens and an image sensor, and a control unit for processing the image picked up by the image pickup unit and storing the processed image in selected one of an internal memory and a predetermined storage medium, the method comprising:
a step of extracting the face image contained in the image picked up by the image pickup unit;
a step of inferring the attributes of a person constituting an object based on the feature amount in an image area including the face image upon extraction of the face image;
a step of adjusting the image pickup conditions for the image pickup unit based on the result of inference in the inference step; and
an information processing step of storing in selected one of the memory and the storage medium the image acquired under the image pickup conditions adjusted by the image pickup conditions adjusting step.

26. A method to be executed by an image pickup device comprising an image pickup unit including a lens and an image sensor, and a control unit for processing the image picked up by the image pickup unit and storing the processed image in selected one of an internal memory and a predetermined storage medium, the method comprising the steps of:
registering the registration information on the feature amount of the face image of each of a predetermined number of objects and the information required for adjusting the optimum image pickup conditions in correspondence with the identification information unique to the object;
extracting the face image contained in the image picked up by the image pickup unit;
estimating the object by comparing the feature amount of the face image extracted in the face image extraction step with the registration information;
adjusting the image pickup conditions for the image pickup unit using the registration information on the object estimated by the estimation step; and
storing in selected one of the memory and the storage medium the image acquired under the image pickup conditions adjusted in the image pickup conditions adjusting step.
